# EUROPEAN PATENT SPECIFICATION

(11) **EP 1 956 515 B1**
(45) Date of publication and mention of the grant of the patent: **12.12.2012**
(21) Application number: 07150475.7
(22) Date of filing: 28.12.2007
(51) Int. Cl.: G06K 7/00

(54) **Automatic output-value adjustment method for reader/writer**
Verfahren zur automatischen Regelung des Ausgangswertes für ein Lese-/Schreibgerät
Procédé de réglage de valeur de sortie automatique pour lecture/écriture

(30) Priority: 09.02.2007 JP 2007030343
(43) Date of publication of application: 13.08.2008
(73) Proprietor: FUJITSU LIMITED, Kawasaki-shi, Kanagawa 211-8588 (JP)
(72) Inventor: Fuchida, Hidehiko c/o Fujitsu Limited, Kawasaki-shi, Kanagawa 211-8588 (JP); Saito, Shuko c/o Fujitsu Limited, Kawasaki-shi, Kanagawa 211-8588 (JP); Maeda, Tomohiko c/o Fujitsu Limited, Kawasaki-shi, Kanagawa 211-8588 (JP); Sato, Kazuo c/o Fujitsu Limited, Kawasaki-shi, Kanagawa 211-8588 (JP); Muraoka, Yoshitaka c/o Fujitsu Limited, Kawasaki-shi, Kanagawa 211-8588 (JP)
(74) Representative: Kreutzer, Ulrich

(56) References cited:
- WO-A-00/65551
- WO-A-2005/059808
- WO-A-2006/096238
- US-A- 6 101 375

## Description

### Background of the Invention

### Field of the Invention

The present invention relates to an automatic output-value adjustment method for radio waves from the antenna of a reader/writer, the method being applied to a production line for managing product manufacturing using an RFID and the reader/writer.

Although an example in which a reader/writer is applied to a production line is described below, the present invention is also applicable to a reader/writer used in other fields reading/writing an RFID.

WO 2005/059808 discloses a prior art reader/writer.

### Description of the Related Art

In a traditional production line, a barcode attached to a product is read and the production line is managed on the basis of the read information. Recently however, with the popularization of RFID, the management became to use RFID tags attached to products in production lines instead of managing production using a bar code. In this case, in order to exactly read the information of the RFID tag, it is necessary to set the most suitable strength of a radio wave applied to the tag by the RFID reader/writer.

Traditionally, a human being first manually determines the optimum output value of a radio wave from the RFID antenna of the reader/writer; after the optimum output value is determined, it is used without any further modification. The optimum output value is determined by writing and reading a plurality of product samples (the same model) in the process of being assembled while manually changing an output value.

The output value of a radio wave from the antenna of a reader/writer is the same for each production process.

However, the traditional production line management system using an RFID has the possibility of affecting its external environment by continually emitting a UHF wave which has a long transmission distance. If the output value of a radio wave is fixed, there are cases that RFID tags cannot be accessed when the intensity of a radio wave is weak or other circumstances. Furthermore, when a product is assembled in a situation in which products of different models are mixed and transported, it is difficult to obtain the optimum output value. Therefore, the output value must be always the maximum value.

### Summary of the Invention

It is an object of the present invention to provide a method in accordance with claim 1 and system in accordance with claim 2.

A first automatic output-value adjustment method in accordance with an example is one in which a reader/writer manages the manufacturing in a production system by reading a tag in a production line. The method comprises setting the output value of a radio wave from the antenna of the reader/writer to a prescribed value, increasing the output value of the radio wave from the prescribed value, reading/writing a tag attached to a product, and returning the output value of the radio wave to the prescribed value after the reading/writing.

A second automatic output-value adjustment method in accordance with an example is one in which a reader/writer manages the manufacturing in a production system by reading a tag in a production line. The method comprises maximizing radio wave output from the antenna of the reader/writer, reading/writing after the tag enters the readable range of the reader/writer, reducing the wave output after it detects a tag attached to the transporter of a product, and returning the wave output to its maximum after a prescribed time after detecting the tag attached to the transporter of the product.

According to an example, data can be read/written with minimum energy. Furthermore, the influence of a radio wave on the external environment can be minimized. When mixing and assembling different models, specifically, communicating with objects with different wave receiving conditions, a minimum optimum wave output value can be automatically set.

### Brief Description of the Drawings

Fig. 1 is a block diagram of a production line management system using an RFID.
Fig. 2 shows a first example.
Fig. 3 shows the process flow of the first example.
Fig. 4 shows a second example.
Fig. 5 shows the process flow of the second example.
Fig. 6 shows an embodiment of the present invention.
Fig. 7 shows the process flow of the embodiment of the present invention.
Fig. 8 shows a third example.
Fig. 9 shows the process flow of the third example.
Fig. 10 shows a fourth example.
Fig. 11 shows the process flow of the fourth example.

In some examples, a radio wave output value is automatically increased/reduced after detecting a product assembly palette or a cart in a production line, the increase/reduction is stopped at the readable /writable value of the data of an RFID tag on the palette or cart, and the RFID tag is accessed at its minimum readable/writable value. Energy radiated to the external environment can be suppressed to its minimum level by suppressing the radio wave output value when prescribed conditions are satisfied.

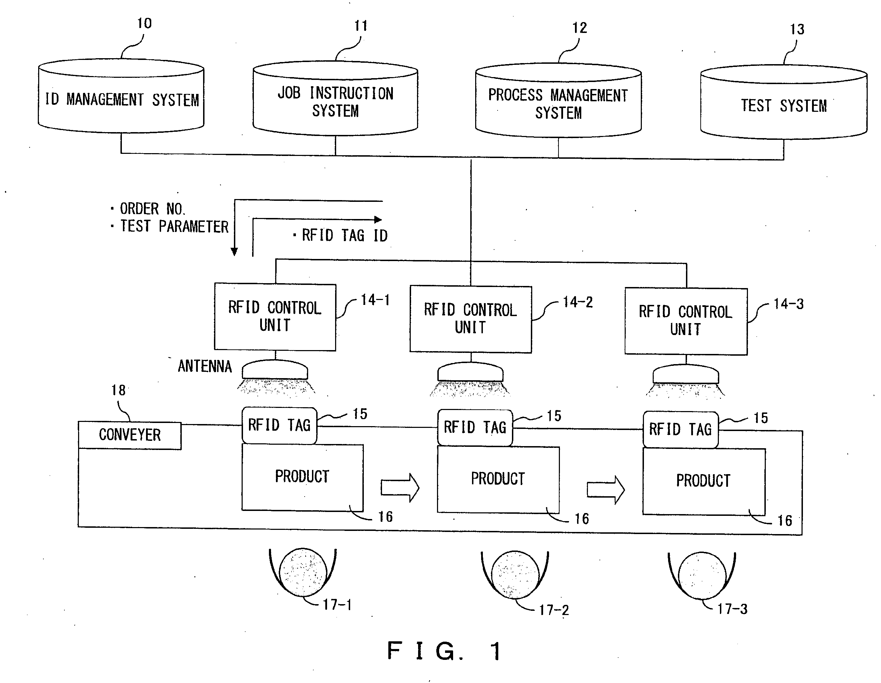

Fig. 1 is a block diagram of a production line management system using an RFID.

In a production line, a product 16 to which an RFID tag 15 is attached is carried on a conveyer 18. In this case, the RFID tag 15 can be directly attached to the product 16 or indirectly attached to a palette or the like carried on the conveyer 18 mounting the product 16. Operators 17-1~17-3 for performing each process attend by the conveyer 18 to apply a job to the product. Each process is provided with one of RFID control units 14-1~14-3, each composed of a reader/writer with an antenna. An ID management system 10, a job instruction system 11, a process management system 12 and a test system 13, all of which are management systems, are connected to each of the RFID control units 14-1-14-3. The ID management system 10 manages products carried on the production line on the basis of an ID read from the RFID tag. The job instruction system 11 instructs a job to be performed by an operator according to the order in which a product is carried on the production line. The process management system 12 manages whether each process is correctly applied to a product. The test system 13 tests whether the process management system using an RFID operates correctly. The order number of a product and a test parameter for performing the operation test of the production line is transmitted from the management systems to each of the RFID control units 14-1-14-3. Each of the RFID control units 14-1-14-3 reads an RFID tag ID stored in the RFID tag 15 that is attached to the product 16 and transmits it to the management systems.

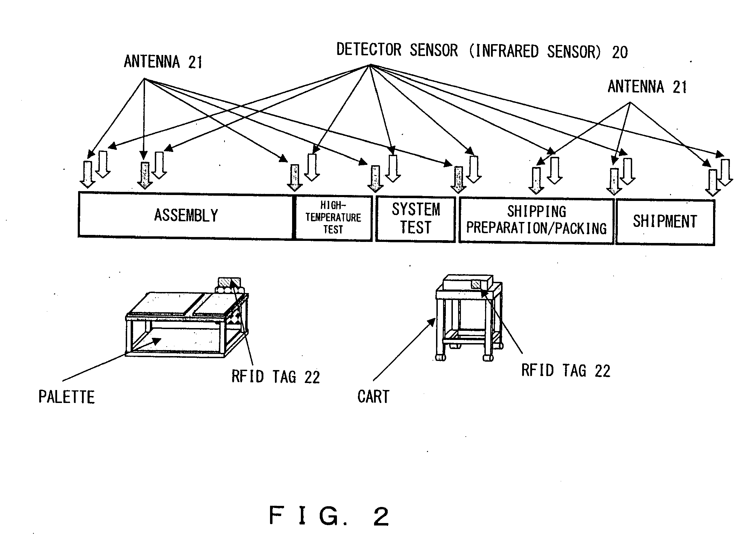

Fig. 2 shows the first example.

Fig. 2 shows the typical assembly line of a certain product. In Fig. 2, it is assumed that processes of "assembly", "high-temperature test", "system test", "shipping preparation /packing" and "shipment" are performed on the assembly line. The assembly line is not limited to a physically single line and the processes may be performed in physically separated positions. The assembly line shown in Fig. 2 is provided with an RFID reader/writer for reading/writing the RFID tag attached to a product to be assembled or a palette, cart and the like for mounting the product. Information for specifying a product, such as an RFID tag ID and the like, is read from the RFID tag attached to the product at the start/end of each process and the process progress of the product assembly line is managed using the read result.

In the first example, each of the production processes of the product assembly line are provided with a detector sensor 20 for detecting a palette or a cart. For the detector sensor 20, an infrared sensor or the like can be used. Alternatively, other types of sensors can be used. The assembly line is also provided with an antenna 21 for reading the RFID tag 22 attached to a product (including a palette/cart). Usually, the antenna 21 transmits a radio wave whose output is its minimum value. This output with its minimum value does not affect the surrounding environment and the like. After the detector sensor 20 detects a palette or a cart, the output of the radio wave from the antenna 21 of the reader/writer is automatically increased gradually from the minimum value and the reading of the RFID tag 22 attached to a product on the palette or cart is attempted. After the completion of the reading/writing of the RFID tag 22, the radio wave output value of the antenna 21 is returned to its minimum value. Alternatively, it can be designed in such a way that usually the antenna 21 will output no radio wave.

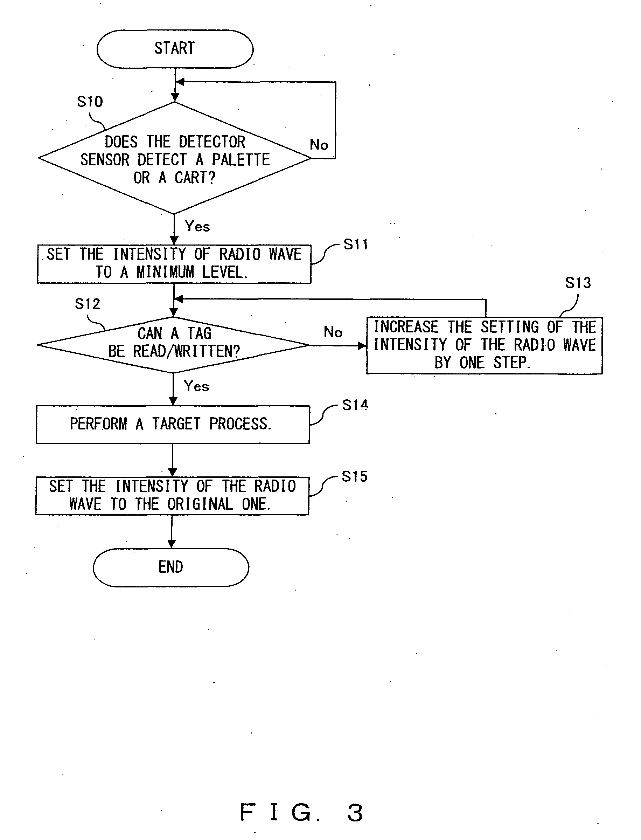

Fig. 3 shows the process flow of the first example.

Firstly, in step S10 it is determined whether the detector sensor 20 has detected a palette or a cart. If the determination in step S10 is No, the detecting operation of the detector sensor 20 is repeated until it detects a palette or a cart. If the determination in step S10 is yes, in step S11 the radio wave output of the antenna 21 of the reader/writer is set to its minimum value. In this case, before step S10, the size of the output of the reader/writer is set at a level not affecting the environment. In step S12 it is determined whether the RFID tag 22 can be read/written. If the determination in step S12 is No, in step S13 the setting value of the radio wave output is increased by one step. The size of the increasing step of the setting value of the radio wave output should be appropriately set by a person having ordinary skill in the art. After the setting value of the radio wave output is increased in step S13, the process returns to step S12 to determine again whether the RFID tag 22 can be read/written. This process is repeated until the RFID tag 22 can be read/written. If it is determined in step S12 that the RFID tag 22 can be read/written, in step S14 a target process, such as the reading of the RFID tag 22 and the like, is performed. Then, in step S15 the radio wave output of the antenna is returned to its original value and the process is terminated.

As described above, since the output value of a radio wave from the antenna 20 becomes high only when necessary, the influence on the environment can be minimized. Since the radio wave output value is increased up to a level where the RFID tag 22 can be actually read/written, the case that access to the RFID tag 22 cannot be made, is avoided.

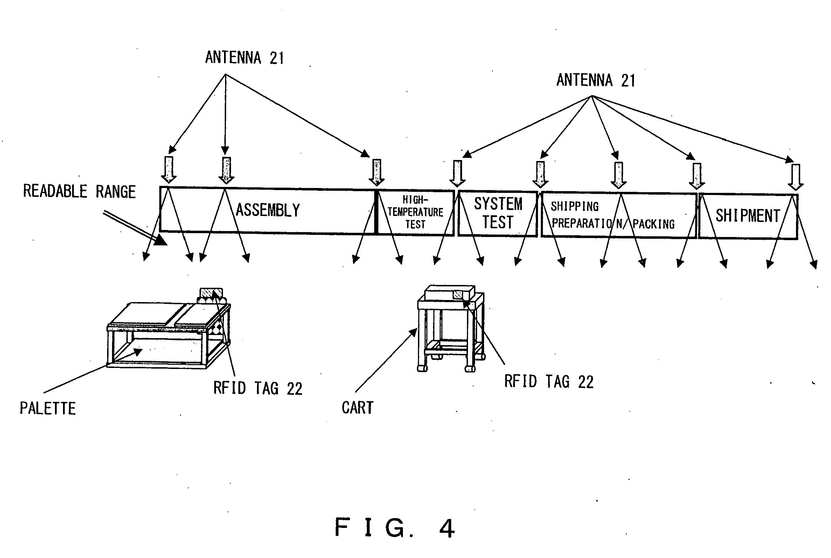

Fig. 4 shows the second example.

In the second preferred embodiment, a radio wave whose output value can read the ID of the RFID tag 22 is steadily output in the product assembly line. After the RFID tag 22 enters its readable range and the ID can be read from the RFID tag 22, the reading/writing of the RFID tag is attempted while gradually increasing the radio wave output. After the completion of the reading/writing, it is retuned to the minimum value. In this case, the readable range shown in Fig. 4 is a range which the radio wave of the reader/writer can cover and a range in which the ID of the RFID tag 22 can be read.

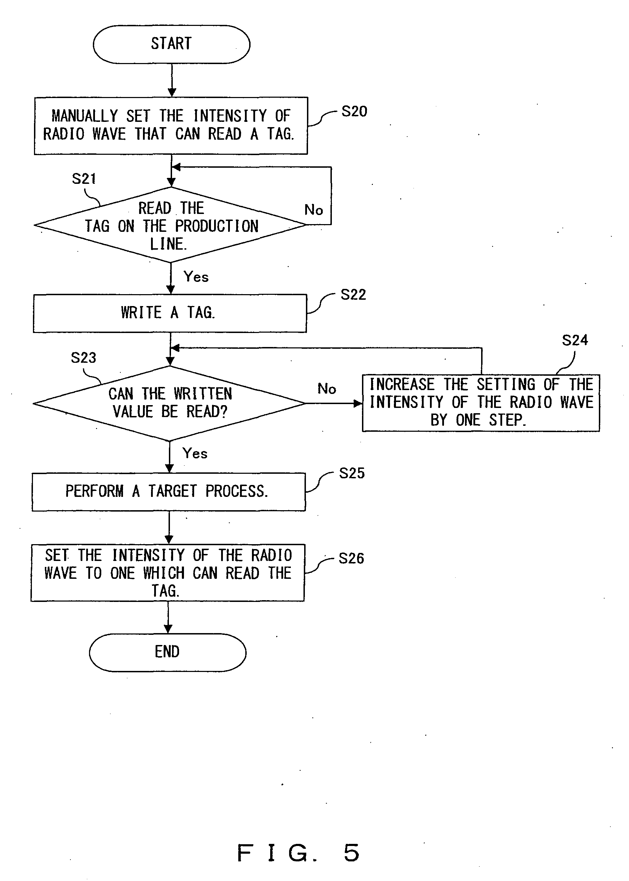

Fig. 5 shows the process flow of the second example.

In step S20, before operation of the product assembly line begins, the output value of a radio wave from the antenna 21 is set in such a way as to read the RFID tag 22. Such an output value is set by letting a product to which the RFID tag 22 is attached pass before the antenna 21 of the reader/writer on trial, checking whether information can be read from the RFID tag 22, and adjusting the radio wave output on the basis of the result. If a plurality of antennas 22 are provided in the production line, the radio wave output of each of them is adjusted.

In step S21, after the operation of the production line, the reading of the RFID tag attached to a product carried on the production line is attempted. If the ID of the RFID tag 22 cannot be read, the reading trial is repeated. If the ID of the RFID tag 22 can be read, it is determined that the RFID tag 22 exists in its readable range. Then, in step S22, predetermined data is written into the RFID tag 22. In the case of the production line, data concerning the progress of the process is written in this stage. For the data to be written, information for identifying a process type, job starting/ending time and the like can be used.

In step S23 it is determined whether the data written in the RFID tag 22 can be read. Since what is done is to read the predetermined information in step S21, a relatively low wave output is acceptable. However, since data is written in step 522, the radio wave output must be higher than a level for just reading the written data. Therefore, in step S23 it is determined whether it can be sufficient to write data correctly by checking whether the written data can be read. If the determination in step S23 is No, in step S24 the output setting value of the radio wave is increased by one step and the process returns to step S22. The size of the increasing step of the setting value of the radio wave output should be appropriately set by a person having ordinary skill in the art. The increase of the radio wave output is gradually performed until the RFID tag 22 can be read in step S22. If the determination in step S23 is Yes, in step S25, a target process, such as the reading of the ID of the RFID tag 22 and the like, is performed. (Since in steps S21~S23 the RFID tag 22 can be read, the ID of the RFID tag 22 is read again and a notice is issued to the management systems. Simultaneously, information that a prescribed process is completed and the like is written.) After the completion of the process, in step S26 the radio wave output is set to one which can read the RFID tag 22 (the value set in step S20) and the process is terminated.

Although in the above-described example a product is mounted and carried on a conveyer, in the following preferred embodiment a human being pushes a cart mounting a product and the cart enters the readable range of a radio wave from the antenna of the reader/writer.

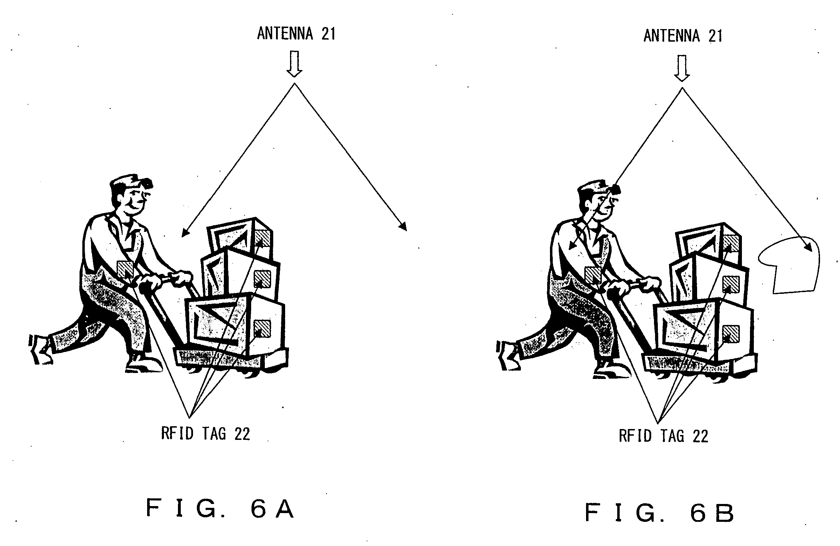

Fig. 6 shows the preferred embodiment of the present invention.

In the preferred embodiment, as shown in Fig. 6A, usually a radio wave with its maximum output is output from the antenna 21. After the RFID tag 22 enters its readable/writable range, the RFID tag is read/written and the process is terminated. After a human being enters the readable range of the RFID tag, as shown in Fig. 6B, the radio wave output is reduced. More specifically, the RFID tag attached to the wrist of the human being (called "human tag") is detected, the output of the radio wave is reduced. N seconds (for example, three seconds) after detecting the "human tag", the output is returned to its maximum value.

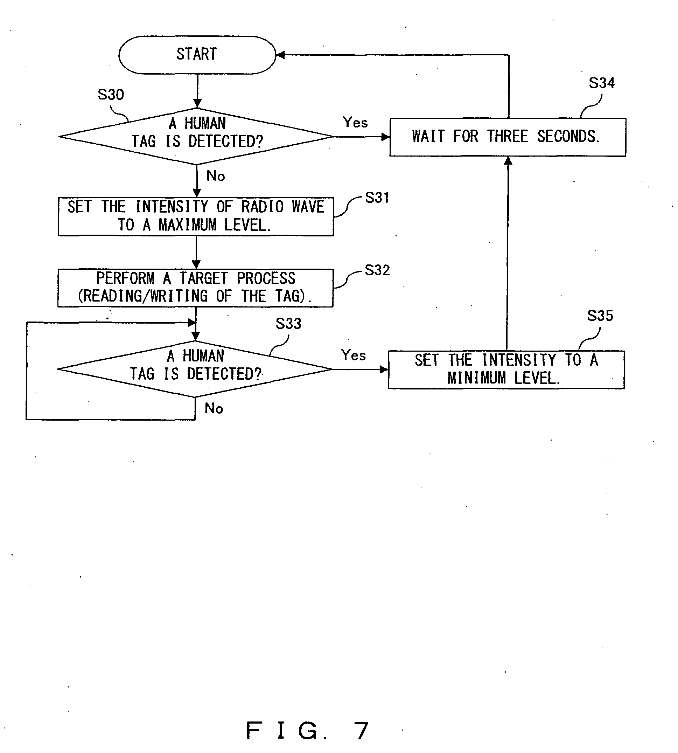

Fig. 7 shows the process flow of the preferred embodiment of the present invention.

When starting the process, firstly, in step S30, it is determined in its initial state whether a "human tag" has been detected. If the determination in step S30 is No, in step S31 the radio wave output value is set to its maximum value. In step S31, the RFID tag 22 is in its read-ready state. In step S22, a target process (the reading/writing of the RFID tag, etc.) is performed. In step S33, it is determined again whether a "human tag" has been detected. If the determination in step S33 is yes, in step S35 the output value is minimized. In step S34, the process returns to the beginning generally after n seconds (for example, three seconds) and the process is repeated from step S30. If the determination in step S33 is no, whether a "human tag" has been detected is watched until a "human tag" is detected.

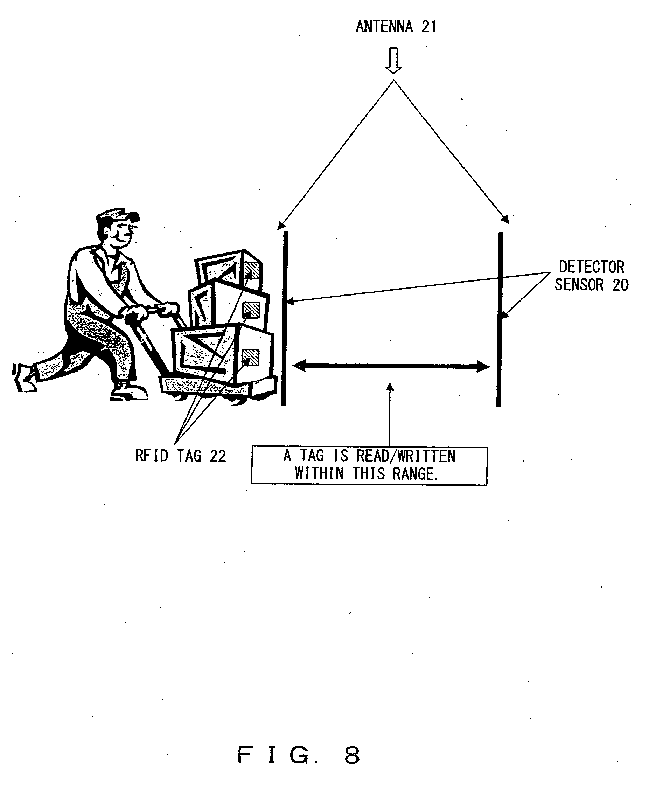

Fig. 8 shows the third example.

In the fourth preferred embodiment, the output value of the antenna 21 is usually maintained at its minimum value. When a cart enters between the detection sensors 20 (infrared sensor, etc.), a radio wave with its maximum output is output from the antenna 21 and the RFID tag 22 is read/written. After the completion of the reading/writing, the output value of the radio wave from the antenna 21 is returned to its minimum value. Thus, reading/writing time and calculation output energy can be minimized. In this case, space between the detector sensors 20 corresponds to the readable/writable range of the above-described preferred embodiments.

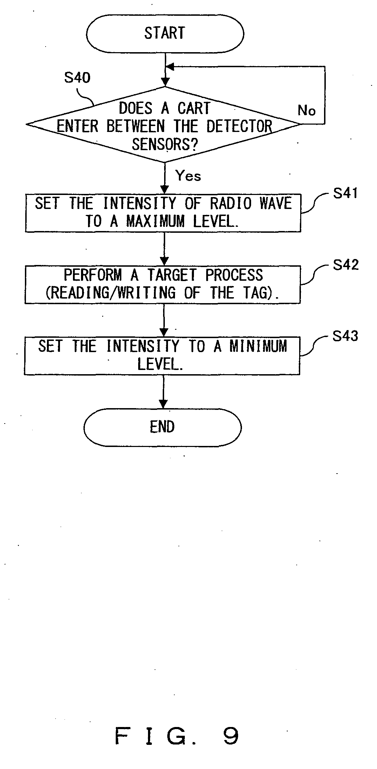

Fig. 9 shows the process flow of the third example.

Firstly, in step S40 it is determined whether a cart enters between the detector sensors 20. If the determination in step S40 is no, step 40 is repeated. If the determination in step S40 is yes, in step S41 the radio wave output value is set to its maximum value. In step S42, a target process (the reading/writing of a tag, etc.) is performed. After the completion of the reading/writing of all the RFID tags 22 mounted on a cart, in step S43 the radio wave output value is set to its minimum value and the process is terminated.

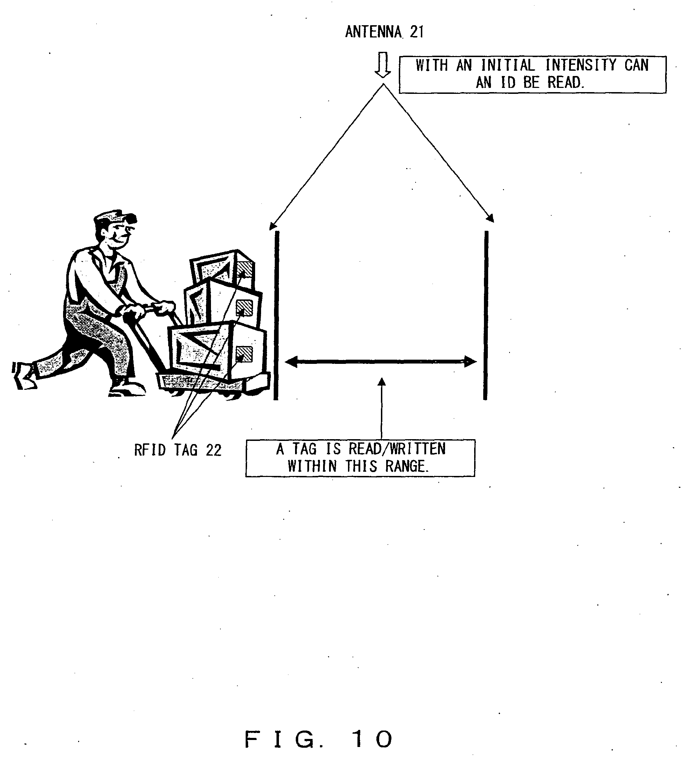

Fig. 10 shows the fourth example.

In the fourth example, a human being pushes a cart, and after the RFID tag 22 enters a range covered by a radio wave from the antenna 21, the RFID tag 22 is read. The antenna 21 outputs a radio wave with its output value sufficient to read the ID of the RFID tag 22. After the RFID tag 22 enters its readable/writable range and the ID can be read from the RFID tag 22, the reading/writing of the RFID tag 22 is attempted while gradually increasing the output value of the radio wave from the antenna 21. After the completion of the reading/writing, the output intensity of the radio wave from the antenna 21 is returned to its initial value (a value which can read the ID) .

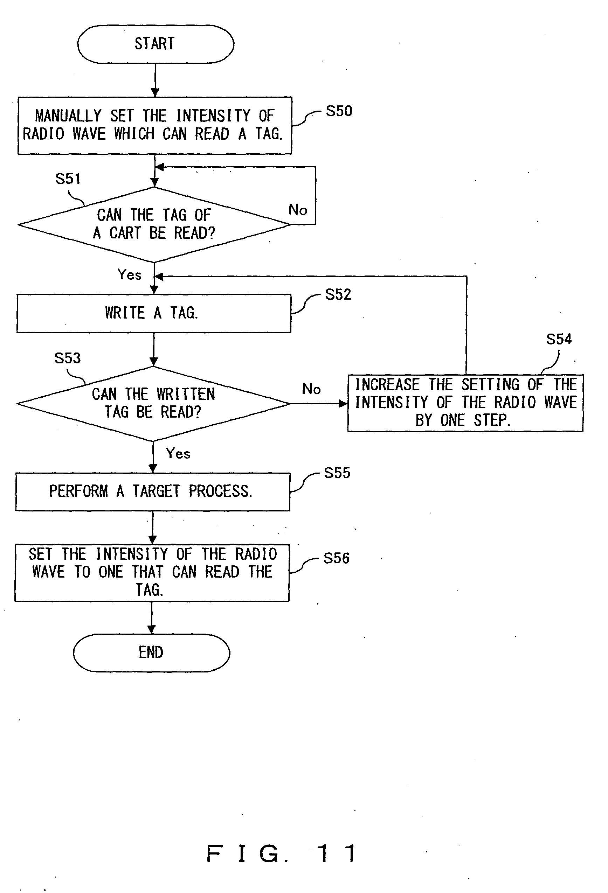

Fig. 11 shows the process flow of the fourth example.

Firstly, in step S50, before the operation of the production line, an output value is manually set in such a way as to read the RFID tag 22. This operation can be considered to be the same as that described in step S20 of Fig. 5. Then, in step S51, the reading of the RFID tag attached to a product mounted on a cart is attempted. If it cannot be read in step S51, it is determined that the tag is not in its readable range. In step S52, prescribed information is written into the RFID tag 22. If the determination in step S53 is no, in step S54 the setting value of the radio wave output is increased by one step. The size of the increasing step of the radio wave output can be appropriately determined by a person having ordinary skill in the art. After the radio wave output setting value is increased in step S54, the process returns to step S52.

If it is determined in step S53 that written information can be read, in step S55 a target process (the reading/writing of the RFID tag 22, etc.) is performed. (In the reading /writing of steps S51~S53, a predetermined value is written and read to appropriately set the radio wave output of the reader/writer. However, in this case, the ID of the RFID tag is actually read, a notice is issued to the management systems, and a product carried on the production line is managed.) In step S56, the radio wave output is set to a radio wave output value which can read the RFID tag 22 and the process is terminated. Although the embodiment and the respective examples are independently described, actually the human tag detection can also be combined with any of the examples. The present invention can also be realized in a combination of each preferred embodiments and the examples.

## Claims

1. An automatic output-value adjustment method of a tag reader/writer, comprising the steps of:
- maximizing (S31) the output of a radio wave from an antenna (21) of the reader/writer;
- reading/writing (S22) a tag when the tag (22) enters a readable range of the reader/writer;
- reducing (S35) the radio wave output when detecting a tag attached to a user; and
- returning (S34) the radio wave output to a maximum after a prescribed time after detecting the tag attached to the user.

2. A system, comprising
- an antenna of a tag reader/writer;
- a setting means for setting an output value of a radio wave from the antenna of the reader/writer to a maximum value;
- a reading means for reading a tag when the tag enters a readable range of the reader/writer;
- a reducing means for reducing the output value of the radio wave when detecting a tag attached to a user by reading of the reading means; and
- a returning means for returning the output value of the radio wave to the maximum value after a prescribed time after detecting the tag attached to the user.

## Patentansprüche

1. Automatisches Ausgabewert-Anpassungsverfahren eines Tag-Lese-/Schreibgeräts, die Schritte umfassend:
- Maximieren (S31) der Ausgabe einer Funkwelle von einer Antenne (21) des Lese-/Schreibgeräts;
- Lesen/Schreiben (S22) eines Tags, wenn das Tag (22) einen lesbaren Bereich des Lese-/Schreibgeräts betritt;
- Reduzieren (S35) der Funkwellenausgabe, wenn ein an einem Benutzer angebrachtes Tag erfasst wird; und
- Zurückführen (S34) der Funkwellenausgabe auf ein Maximum nach einer vorbestimmten Zeit nach dem Erfassen des an dem Benutzer angebrachten Tags.

2. System, umfassend
- eine Antenne eines Lese-/Schreibgeräts;
- ein Einstellmittel zum Einstellen eines Ausgabewerts einer Funkwelle von der Antenne des Lese-/Schreibgeräts auf einen Maximalwert;
- ein Lesemittel zum Lesen eines Tags, wenn das Tag einen lesbaren Bereich des Lese-/Schreibgeräts betritt;
- ein Reduzierungsmittel um Reduzieren des Ausgabewerts der Funkwelle, wenn ein an einem Benutzer angebrachtes Tag durch Lesen des Lesemittels erfasst wird; und
- ein Rückführungsmittel zum Zurückführen des Ausgabewerts der Funkwelle auf den Maximalwert nach einer vorbestimmten Zeit nach dem Erfassen des an einem Benutzer angebrachten Tags.

## Revendications

1. Procédé d'ajustement de valeur de sortie automatique d'un dispositif de lecture/écriture d'étiquette, comprenant les étapes de :
- maximisation (S31) de la sortie d'une onde radio depuis une antenne (21) du dispositif de lecture/écriture ;
- lecture/écriture (S22) d'une étiquette lorsque l'étiquette (22) entre dans une plage lisible du dispositif de lecture/écriture ;
- réduction (S35) de la sortie d'onde radio lors de la détection d'une étiquette fixée à un utilisateur ;
et
- retour (S34) de la sortie d'onde radio à un maximum après un temps prescrit après la détection de l'étiquette fixée à l'utilisateur.

2. Système, comprenant
- une antenne d'un dispositif de lecture/écriture d'étiquette ;
- des moyens de définition pour définir une valeur de sortie d'une onde radio provenant de l'antenne du dispositif de lecture/écriture à une valeur maximale ;
- des moyens de lecture pour lire une étiquette lorsque l'étiquette entre dans une plage lisible du dispositif de lecture/écriture ;
- des moyens de réduction pour réduire la valeur de sortie de l'onde radio lors de la détection d'une étiquette fixée à un utilisateur par lecture des moyens de lecture ; et
- des moyens de retour pour retourner la valeur de sortie de l'onde radio à la valeur maximale après un temps prescrit après détection de l'étiquette fixée à l'utilisateur.
